# EUROPEAN PATENT APPLICATION

(11) **EP 3 518 513 A1**
(43) Date of publication of application: **31.07.2019**
(21) Application number: 18757648.3
(22) Date of filing: 22.01.2018
(51) Int. Cl.: H04M 3/42

(54) **STREAMING DATA ACQUISITION METHOD, DEVICE, AND SYSTEM**

(30) Priority: 22.02.2017 CN 201710097212
(71) Applicant: Huawei Technologies Co., Ltd., Longgang District Shenzhen, Guangdong 518129 (CN)
(72) Inventor: CAI, Yun, Shenzhen Guangdong 518129 (CN)
(74) Representative: Gill Jennings & Every LLP
(86) International application number: PCT/CN2018/073658
(87) International publication number: WO 2018/153194

(57) **Abstract**

Embodiments of the present invention relate to the field of communications technologies, and provide a streaming media data obtaining method, an apparatus, and a system, to reduce a bandwidth of a second server occupied in a process of obtaining streaming media data. The method includes: obtaining, by a calling terminal device, a first identifier used to identify first streaming media data; sending, by the calling terminal device, a streaming media data request message including the first identifier to a first server, where the streaming media data request message is used to request the first streaming media data; and receiving, by the calling terminal device, a streaming media data response message that is sent by the first server and that includes the first streaming media data, where the first streaming media data is streaming media data that is played on the calling terminal device when the calling terminal device calls a called terminal device.

## Description

This application claims priority to Chinese Patent Application No. 201710097212.X, filed with the Chinese Patent Office on February 22, 2017 and entitled "STREAMING MEDIA DATA OBTAINING METHOD, APPARATUS, AND SYSTEM", which is incorporated herein by reference in its entirety.

### TECHNICAL FIELD

Embodiments of the present invention relate to the field of communications technologies, and in particular, to a streaming media data obtaining method, an apparatus, and a system.

### BACKGROUND

With rapid development of communications technologies, when a calling terminal device calls a called terminal device, in a process in which the calling terminal device waits for a response of the called terminal device to the call of the calling terminal device, a multimedia ring back tone may be played on the calling terminal device. Currently, the multimedia ring back tone that may be played on the calling terminal device may include a video, an animation, a picture, text, music, and the like.

Usually, in a process in which the calling terminal device calls the called terminal device, the calling terminal device may send a call request message to a core network device. After the core network device receives the call request message, if the core network device determines that the called terminal device has applied for a multimedia ring back tone service, the core network device may send a notification message including an identifier of the calling terminal device to a multimedia ring back tone server in which the called terminal device customizes a multimedia ring back tone. After receiving the notification message, the multimedia ring back tone server may send, to the calling terminal device, the multimedia ring back tone that is customized by the called terminal device in the multimedia ring back tone server. Further, the calling terminal device may receive the multimedia ring back tone sent by the multimedia ring back tone server and play the multimedia ring back tone.

However, data traffic of the multimedia ring back tone is usually relatively large. Therefore, in the foregoing method, the multimedia ring back tone server occupies a relatively high bandwidth of the multimedia ring back tone server when sending the multimedia ring back tone to the calling terminal device.

### SUMMARY

This application provides a streaming media data obtaining method, an apparatus, and a system, to reduce a bandwidth of a second server occupied in a process of obtaining streaming media data.

To achieve the foregoing objective, the following technical solutions are used in this application:
According to a first aspect, this application provides a streaming media data obtaining method. The method may include: obtaining, by a calling terminal device, a first identifier used to identify first streaming media data, where the first streaming media data is streaming media data that is played on the calling terminal device when the calling terminal device calls a called terminal device; sending, by the calling terminal device, a streaming media data request message including the first identifier to a first server, where the streaming media data request message is used to request the first streaming media data; and receiving, by the calling terminal device, a streaming media data response message that is sent by the first server and that includes the first streaming media data.

The streaming media data response message is a response message to the streaming media data request message.

In the streaming media data obtaining method provided in this application, because the calling terminal device may obtain an identifier (that is, the first identifier) of the first streaming media data and the calling terminal device requests the first server for the first streaming media data based on the first identifier, the calling terminal device does not need to obtain the first streaming media data from a second server (that is, a server in which the calling terminal device or the called terminal device customizes streaming media data), so that the second server does not need to send the first streaming media data to the calling terminal device. Therefore, a bandwidth of the second server occupied in a process of obtaining streaming media data can be reduced.

Further, because the calling terminal device may request the first server for the first streaming media data based on the first identifier obtained by the calling terminal device, and receive the first streaming media data sent by the first server, that is, the calling terminal device does not need to obtain the first streaming media data from the second server (that is, a server of an operator), the operator does not need to purchase and save a large amount of streaming media data. Therefore, costs of providing streaming media data by the operator can be reduced.

In a first optional implementation of the first aspect, when the first identifier is an identifier that is set in the called terminal device, the obtaining, by a calling terminal device, a first identifier may specifically include: sending, by the calling terminal device to the second server, a call request message used by the calling terminal device to call the called terminal device; and receiving, by the calling terminal device, a call response message that is sent by the second server and that includes the first identifier, where the first identifier is obtained from the called terminal device after the second server receives the call request message.

The call response message is a response message to the call request message with which the called terminal device responds to the calling terminal device after the calling terminal device calls the called terminal device and before a communication connection is established between the calling terminal device and the called terminal device (that is, the called terminal device connects to an incoming call of the calling terminal device by using an ACCEPT key on a caller ID display interface of the called terminal device).

In this application, the calling terminal device may obtain, from the called terminal device, the first identifier saved in the called terminal device. Therefore, the calling terminal device may obtain the first streaming media data from the first server based on the first identifier and play the first streaming media data.

In a second optional implementation of the first aspect, when the first identifier is an identifier that is set in the calling terminal device, the obtaining, by a calling terminal device, a first identifier specifically includes: obtaining, by the calling terminal device, the first identifier saved in the calling terminal device.

In this application, the calling terminal device may save the identifier (that is, the first identifier) of the first streaming media data in the calling terminal device. When the calling terminal device calls the called terminal device, the calling terminal device may obtain the first identifier saved in the calling terminal device, further obtain the first streaming media data from the first server based on the first identifier, and play the first streaming media data.

In a third optional implementation of the first aspect, the streaming media data obtaining method provided in this application may further include: determining, by the calling terminal device, that the calling terminal device fails to obtain the first streaming media data.

In a fourth optional implementation of the first aspect, the determining, by the calling terminal device, that the calling terminal device fails to obtain the first streaming media data may specifically include: if the calling terminal device receives, in a preset time segment, an error response message sent by the first server, determining, by the calling terminal device, that the calling terminal device fails to obtain the first streaming media data, where the error response message is used to indicate that the first server fails to obtain the first streaming media data.

In this application, the error response message is a response message to the streaming media data request message (that is, the streaming media data request message that is sent by the calling terminal device to the first server and that includes the first identifier in the first aspect). In the first aspect, the calling terminal device receives the streaming media data response message sent by the first server. The streaming media data response message is also a response message to the streaming media data request message. As can be learned, the streaming media data response message and the error response message are both response messages to the streaming media data request message. A difference is that when the calling terminal device receives the streaming media data response message sent by the first server, because the streaming media data response message includes the first streaming media data, the streaming media data response message may indicate that the calling terminal device succeeds in obtaining the first streaming media data; and when the calling terminal device receives the error response message sent by the first server, because an identifier in the error response message indicates that the first server has not obtained the first streaming media data, that is, indicates that the first server cannot provide the first streaming media data to the calling terminal device, the error response message may indicate that the calling terminal device fails to obtain the first streaming media data.

In a fifth optional implementation of the first aspect, the determining, by the calling terminal device, that the calling terminal device fails to obtain the first streaming media data may specifically include: if the calling terminal device has not received, in the preset time segment, the streaming media data response message and the error response message that are sent by the first server, determining, by the calling terminal device, that the calling terminal device fails to obtain the first streaming media data.

In this application, when failing to obtain the first streaming media data from the first server, the calling terminal device may obtain second streaming media data from the second server, so that in a process in which the calling terminal device waits for a response of the called terminal device to a call of the calling terminal device, the second streaming media data may be played on the calling terminal device.

In a sixth optional implementation of the first aspect, after the determining, by the calling terminal device, that the calling terminal device fails to obtain the first streaming media data, the streaming media data obtaining method provided in this application may further include: sending, by the calling terminal device, a notification message to the second server, where the notification message is used by the calling terminal device to notify the second server that the calling terminal device fails to obtain the first streaming media data; and receiving, by the calling terminal device, the second streaming media data sent by the second server, where the second streaming media data is streaming media data that is customized by the calling terminal device or the called terminal device in the second server.

In the streaming media data obtaining method provided in this application, the calling terminal device may send the notification message to the second server, to notify the second server that the calling terminal device fails to obtain the streaming media data. Then, after receiving the notification message sent by the calling terminal device, the second server may send, to the calling terminal device, the second streaming media data that is customized by the calling terminal device or the called terminal device in the second server. Further, the calling terminal device may obtain the second streaming media data and play the second streaming media data. Therefore, if the calling terminal device determines that the calling terminal device fails to obtain the first streaming media data from the first server, the calling terminal device may further obtain the second streaming media data from the second server, to ensure that the calling terminal device successfully plays the streaming media data in the process in which the calling terminal device waits for a response of the called terminal device to a call of the calling terminal device.

According to a second aspect, this application provides a streaming media data obtaining method. The method may include: receiving, by a called terminal device, an identifier request message that is sent by a server and that is used by the server to request the called terminal device for a first identifier, where the first identifier is used to identify first streaming media data, and the first streaming media data is streaming media data that is played on a calling terminal device when the calling terminal device calls the called terminal device; obtaining, by the called terminal device, the first identifier; and sending, by the called terminal device, an identifier response message including the first identifier to the server.

In the streaming media data obtaining method provided in this application, because the called terminal device may send the first identifier to the calling terminal device by using the server (which may be referred to as a second server), the calling terminal device may request a first server for the first streaming media data based on the first identifier. Therefore, the calling terminal device does not need to obtain the first streaming media data from the second server (that is, the server in which the calling terminal device or the called terminal device customizes the streaming media data), so that the second server does not need to send the first streaming media data to the calling terminal device. Therefore, a bandwidth of the second server occupied in a process of obtaining streaming media data can be reduced.

Further, because the calling terminal device may request the first server for the first streaming media data based on the first identifier sent by the called terminal device to the calling terminal device, and receive the first streaming media data sent by the first server, that is, the calling terminal device does not need to obtain the first streaming media data from the second server (that is, a server of an operator), the operator does not need to purchase and save a large amount of streaming media data. Therefore, costs of providing streaming media data by the operator can be reduced.

In a first optional implementation of the second aspect, the obtaining, by the called terminal device, the first identifier may specifically include: obtaining, by the called terminal device, the first identifier saved in the called terminal device.

In this application, after obtaining the first identifier saved in the called terminal device, the called terminal device may send the first identifier to the calling terminal device, so that the calling terminal device may obtain the first streaming media data from the first server based on the first identifier.

According to a third aspect, this application provides a streaming media data obtaining method. The method may include: receiving, by a server, a call request message that is sent by a calling terminal device and that is used by the calling terminal device to call a called terminal device; sending, by the server to the called terminal device, an identifier request message used by the server to request the called terminal device for a first identifier, where the first identifier is used to identify first streaming media data, and the first streaming media data is streaming media data that is played on the calling terminal device when the calling terminal device calls the called terminal device; receiving, by the server, an identifier response message that is sent by the called terminal device and that includes the first identifier; and sending, by the server, a call response message including the first identifier to the calling terminal device.

In the streaming media data obtaining method provided in this application, after the server (which may be referred to as a second server) receives the call request message sent by the calling terminal device, the second server may request the called terminal device for the first identifier and send the first identifier to the calling terminal device, so that the calling terminal device may obtain the first streaming media data from a first server based on the first identifier. In this way, the calling terminal device does not need to obtain the first streaming media data from the second server (that is, the server in which the calling terminal device or the called terminal device customizes streaming media data), so that the second server does not need to send the first streaming media data to the calling terminal device. Therefore, a bandwidth of the second server occupied in a process of obtaining streaming media data can be reduced.

Further, because the calling terminal device may request the first server for the first streaming media data based on the first identifier obtained by the calling terminal device, and receive the first streaming media data sent by the first server, that is, the calling terminal device does not need to obtain the first streaming media data from the second server (that is, a server of an operator), the operator does not need to purchase and save a large amount of streaming media data. Therefore, costs of providing streaming media data by the operator can be reduced.

According to a fourth aspect, this application provides a terminal device. The terminal device is a calling terminal device. The terminal device may include an obtaining module, a sending module, and a receiving module. The obtaining module is configured to obtain a first identifier used to identify first streaming media data, where the first streaming media data is streaming media data that is played on the calling terminal device when the calling terminal device calls a called terminal device. The sending module is configured to send a streaming media data request message including the first identifier obtained by the obtaining module to a first server, where the streaming media data request message is used to request the first streaming media data. The receiving module is configured to receive a streaming media data response message that is sent by the first server and that includes the first streaming media data.

In a first optional implementation of the fourth aspect, the obtaining module is specifically configured to: send, to a second server, a call request message used by the calling terminal device to call the called terminal device, and receive a call response message that is sent by the second server and that includes the first identifier, where the first identifier is obtained from the called terminal device after the second server receives the call request message.

In a second optional implementation of the fourth aspect, when the first identifier is an identifier that is set in the calling terminal device, the obtaining module is specifically configured to obtain the first identifier saved in the calling terminal device.

In a third optional implementation of the fourth aspect, the terminal device provided in this application may include a determining module. The determining module is configured to determine that the calling terminal device fails to obtain the first streaming media data.

In a fourth optional implementation of the fourth aspect, the determining module is specifically configured to: if the receiving module receives, in a preset time segment, an error response message sent by the first server, determine that the calling terminal device fails to obtain the first streaming media data, where the error response message is used to indicate that the first server fails to obtain the first streaming media data.

In a fifth optional implementation of the fourth aspect, the determining module is specifically configured to: if the receiving module has not received, in the preset time segment, the streaming media data response message and the error response message that are sent by the first server, determine that the calling terminal device fails to obtain the first streaming media data.

In a sixth optional implementation of the fourth aspect, the sending module is further configured to: after the determining module determines that the calling terminal device fails to obtain the first streaming media data, send a notification message to the second server, where the notification message is used by the calling terminal device to notify the second server that the calling terminal device fails to obtain the first streaming media data; and the receiving module is further configured to receive second streaming media data sent by the second server, where the second streaming media data is streaming media data that is customized by the calling terminal device or the called terminal device in the second server.

According to a fifth aspect, this application provides a terminal device. The terminal device is a called terminal device. The terminal device may include a receiving module, an obtaining module, and a sending module. The receiving module is configured to receive an identifier request message that is sent by a server and that is used by the server to request the called terminal device for a first identifier, where the first identifier is used to identify first streaming media data, and the first streaming media data is streaming media data that is played on a calling terminal device when the calling terminal device calls the called terminal device; the obtaining module is configured to obtain the first identifier; and the sending module is configured to send an identifier response message including the first identifier to the server.

In a first optional implementation of the fifth aspect, the obtaining module is specifically configured to obtain the first identifier saved in the called terminal device.

According to a sixth aspect, this application provides a server. The server may include a receiving module and a sending module. The receiving module is configured to receive a call request message that is sent by a calling terminal device and that is used by the calling terminal device to call a called terminal device; the sending module is configured to send, to the called terminal device, an identifier request message that is used by the server to request the called terminal device for a first identifier, where the first identifier is used to identify first streaming media data, and the first streaming media data is streaming media data that is played on the calling terminal device when the calling terminal device calls the called terminal device; the receiving module is further configured to receive an identifier response message that is sent by the called terminal device and that includes the first identifier; and the sending module is further configured to send a call response message including the first identifier received by the receiving module to the calling terminal device.

According to a seventh aspect, a terminal device is provided. The terminal device may include a processor and a memory coupled to the processor. The memory may be configured to store a computer instruction. When the terminal device runs, the processor executes the computer instruction stored in the memory, to enable the terminal device to perform the streaming media data obtaining method according to any one of the first aspect and various optional implementations of the first aspect.

According to an eighth aspect, a computer-readable storage medium is provided. The computer-readable storage medium may include a computer instruction. When the computer instruction is run on a terminal device, the terminal device is enabled to perform the streaming media data obtaining method according to any one of the first aspect and various optional implementations of the first aspect.

According to a ninth aspect, a computer program product including a computer instruction is provided. When the computer program product is run on a terminal device, the terminal device is enabled to perform the streaming media data obtaining method according to any one of the first aspect and various optional implementations of the first aspect.

For descriptions of related content and technical effects in the seventh aspect to the ninth aspect, refer to related descriptions of related content and technical effects of the first aspect and various optional implementations of the first aspect. Details are not described herein again.

According to a tenth aspect, a terminal device is provided. The terminal device may include a processor and a memory coupled to the processor. The memory may be configured to store a computer instruction. When the terminal device runs, the processor executes the computer instruction stored in the memory, to enable the terminal device to perform the streaming media data obtaining method according to any one of the second aspect and various optional implementations of the second aspect.

According to an eleventh aspect, a computer-readable storage medium is provided. The computer-readable storage medium may include a computer instruction. When the computer instruction is run on a terminal device, the terminal device is enabled to perform the streaming media data obtaining method according to any one of the second aspect and various optional implementations of the second aspect.

According to a twelfth aspect, a computer program product including a computer instruction is provided. When the computer program product is run on a terminal device, the terminal device is enabled to perform the streaming media data obtaining method according to any one of the second aspect and various optional implementations of the second aspect.

For descriptions of related content and technical effects in the tenth aspect to the twelfth aspect, refer to related descriptions of related content and technical effects of the second aspect and various optional implementations of the second aspect. Details are not described herein again.

According to a thirteenth aspect, a server is provided. The server may include a processor and a memory coupled to the processor. The memory may be configured to store a computer instruction. When the server runs, the processor executes the computer instruction stored in the memory, to enable the server to perform the streaming media data obtaining method according to the third aspect.

According to a fourteenth aspect, a computer-readable storage medium is provided. The computer-readable storage medium may include a computer instruction. When the computer instruction is run on a server, the server is enabled to perform the streaming media data obtaining method according to the third aspect.

According to a fifteenth aspect, a computer program product including a computer instruction is provided. When the computer program product is run on a server, the server is enabled to perform the streaming media data obtaining method according to the third aspect.

For descriptions of related content and technical effects in the thirteenth aspect to the fifteenth aspect, refer to related descriptions of related content and technical effects of the third aspect and various optional implementations of the third aspect. Details are not described herein again.

According to a sixteenth aspect, this application provides a communications system. The communications system may include: a first server, the terminal device according to any one of the fourth aspect and various optional implementations of the fourth aspect, the terminal device according to any one of the fifth aspect and various optional implementations of the fifth aspect, and the server according to the sixth aspect, where the server is a second server; or
the communications system may include: a first server, the terminal device according to the seventh aspect, the terminal device according to the tenth aspect, and the server according to the thirteenth aspect, where the server is a second server.

### BRIEF DESCRIPTION OF DRAWINGS

FIG. 1 is a schematic architectural diagram of a communications system according to an embodiment of the present invention;
FIG. 2 is a schematic diagram of hardware of a mobile phone according to an embodiment of the present invention;
FIG. 3 is a schematic diagram of hardware of a first server according to an embodiment of the present invention;
FIG. 4 is a first schematic diagram of a streaming media data obtaining method according to an embodiment of the present invention;
FIG. 5 is a second schematic diagram of a streaming media data obtaining method according to an embodiment of the present invention;
FIG. 6 is a first schematic diagram of setting a first identifier in a calling terminal device or a called terminal device according to an embodiment of the present invention;
FIG. 7 is a second schematic diagram of setting a first identifier in a calling terminal device or a called terminal device according to an embodiment of the present invention;
FIG. 8 is a third schematic diagram of a streaming media data obtaining method according to an embodiment of the present invention;
FIG. 9 is a third schematic diagram of setting a first identifier in a called terminal device according to an embodiment of the present invention;
FIG. 10 is a fourth schematic diagram of setting a first identifier in a called terminal device according to an embodiment of the present invention;
FIG. 11 is a fourth schematic diagram of a streaming media data obtaining method according to an embodiment of the present invention;
FIG. 12 is a first schematic structural diagram of a calling terminal device according to an embodiment of the present invention;
FIG. 13 is a second schematic structural diagram of a calling terminal device according to an embodiment of the present invention;
FIG. 14 is a first schematic structural diagram of a called terminal device according to an embodiment of the present invention;
FIG. 15 is a second schematic structural diagram of a called terminal device according to an embodiment of the present invention;
FIG. 16 is a first schematic structural diagram of a second server according to an embodiment of the present invention; and
FIG. 17 is a second schematic structural diagram of a second server according to an embodiment of the present invention.

### DESCRIPTION OF EMBODIMENTS

In the specification and claims in the embodiments of the present invention, the terms "first", "second", "third", "fourth", and so on are intended to distinguish between different objects but do not indicate a particular order of the objects. For example, first streaming media data, second streaming media data, and the like are used to distinguish between different streaming media data, but are not used to describe a particular order of streaming media data.

In addition, in the embodiments of the present invention, the word "exemplary" or "for example" is used to represent giving an example, an illustration, or a description. Any embodiment or design scheme described as an "exemplary" or "for example" in the embodiments of the present invention should not be explained as being more preferred or having more advantages than another embodiment or design scheme. Exactly, use of the word "exemplary" or "example" or the like is intended to present a related concept in a specific manner.

Usually, when a calling terminal device calls a called terminal device, in a process in which the calling terminal device waits for a response of the called terminal device to the call of the calling terminal device, the calling terminal device may receive a multimedia ring back tone sent by a multimedia ring back tone server and play the multimedia ring back tone. However, data traffic of the multimedia ring back tone is usually relatively large. Therefore, the multimedia ring back tone server occupies a relatively large bandwidth of the multimedia ring back tone server when sending the multimedia ring back tone to the calling terminal device.

To resolve the foregoing problem, the embodiments of the present invention provide a streaming media data obtaining method, an apparatus, and a system. The method may be applied to a mobile communication scenario (that is, a calling terminal device calls a called terminal device by using a phone number), or may be applied to an Internet communication scenario (that is, the calling terminal device calls the called terminal device by using network telephony software or other social software). In a process in which the calling terminal device waits for a response of the called terminal device to the call of the calling terminal device, the calling terminal device may obtain an identifier used to identify first streaming media data (that is, streaming media data played on the calling terminal device when the calling terminal device calls the called terminal device and in the process in which the calling terminal waits for the response of the called terminal device to the call of the calling terminal device) (which is briefly referred to as a first identifier below). Then, the calling terminal device may add the first identifier to a streaming media data request message used to request the first streaming media data and send the streaming media data request message carrying the first identifier to a first server (which may be, for example, a server of a multimedia website). After receiving the streaming media data request message sent by the calling terminal device, the first server may add the first streaming media data identified by the first identifier to a streaming media data response message and send the streaming media data response message carrying the first streaming media data to the calling terminal device. Then, the calling terminal device may obtain the first streaming media data from the streaming media data response message. Compared with the prior art, in the embodiments of the present invention, because the calling terminal device may obtain the identifier (that is, the first identifier) of the first streaming media data and request the first server for the first streaming media data based on the first identifier, the calling terminal device does not need to obtain the first streaming media data from a second server (that is, a server in which the calling terminal device or the called terminal device customizes streaming media data, for example, a multimedia ring back tone server of an operator), so that the second server does not need to send the first streaming media data to the calling terminal device. Therefore, a bandwidth of the second server occupied in a process of obtaining streaming media data can be reduced.

It should be noted that in the embodiments of the present invention, in the mobile communication scenario, the server in which the calling terminal device or the called terminal device customizes streaming media data may be referred to as a streaming media data server (which may be understood as a multimedia ring back tone server of an operator of mobile communication). In the Internet communication scenario, the server in which the calling terminal device or the called terminal device customizes streaming media data may be an application server (which may be, for example, understood as a server of network telephony software or other social software).

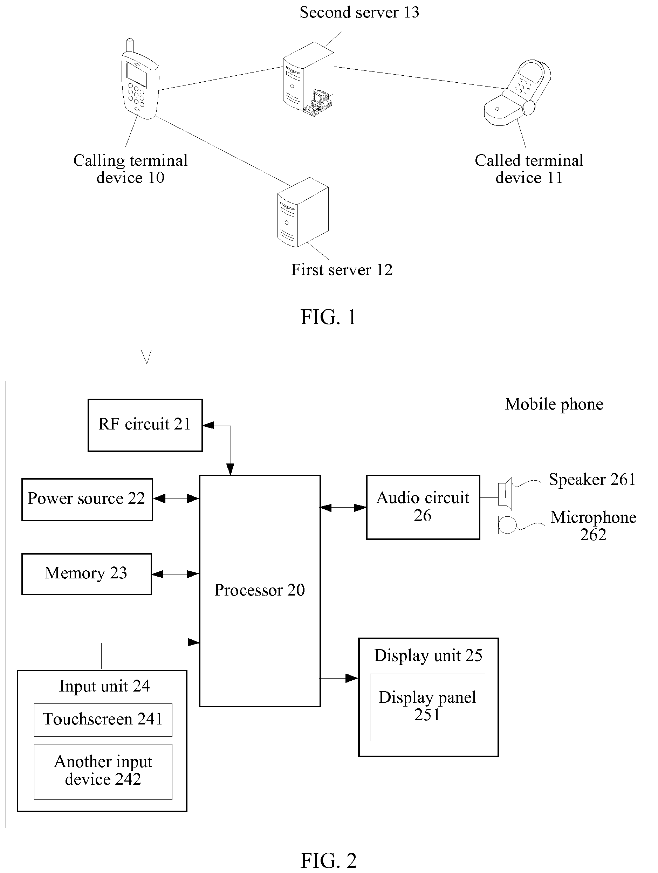

The streaming media data obtaining method and the apparatus that are provided in the embodiments of the present invention may be applied to a communications system. FIG. 1 is a schematic architectural diagram of a communications system according to an embodiment of the present invention. As shown in FIG. 1, the communications system may include: a calling terminal device 10, a called terminal device 11, a first server 12, and a second server 13. The calling terminal device 10 is connected to the first server 12 and the second server 13. The called terminal device 11 is connected to the second server 13. In actual application, connections between the foregoing devices may be wireless connections. For convenience of visually showing a connection relationship between the devices, solid lines are used for illustration in FIG. 1. In a process in which the calling terminal device 10 calls the called terminal device 11, first, the calling terminal device 10 may send, to the second server 13, a call request message used by the calling terminal device to call the called terminal device. In a process in which the calling terminal device 10 waits for a response of the called terminal device to the call of the calling terminal device (that is, after the calling terminal device calls the called terminal device, the called terminal device accepts or rejects the call of the calling terminal device), the calling terminal device 10 may obtain an identifier (that is, the foregoing first identifier) of first streaming media data (that is, streaming media data played on the calling terminal device in the process in which the calling terminal device waits for the response of the called terminal device to the call of the calling terminal device). Then, the calling terminal device sends a streaming media data request message including the first identifier to the first server 12. The streaming media data request message is used to request the first server for the first streaming media data. After receiving the streaming media data request message sent by the calling terminal device 10, the first server 12 sends a streaming media data response message including the first streaming media data to the calling terminal device 10. Then, the calling terminal device 10 obtains the first streaming media data from the streaming media data response message.

In this embodiment of the present invention, after the calling terminal device calls the called terminal device, the called terminal device may accept the call of the calling terminal device by using an ACCEPT key on a caller ID display interface of the called terminal device, or the called terminal device may reject the call of the calling terminal device by using a REJECT key on the caller ID display interface of the called terminal device.

Optionally, in this embodiment of the present invention, the first identifier may be a first identifier that is set in the calling terminal device, or may be a first identifier that is set in the called terminal device.

In this embodiment of the present invention, a method for obtaining, by the calling terminal device, the first identifier that is set in the calling terminal device is different from a method for obtaining, by the calling terminal device, the first identifier that is set in the called terminal device. Specifically, the method for obtaining, by the calling terminal device, the first identifier is described in detail in the following streaming media data obtaining method.

It should be noted that in this embodiment of the present invention, the calling terminal device and the called terminal device may be terminal devices of a same structure, or may be terminal devices of different structures. It is assumed that the calling terminal device and the called terminal device are terminal devices of a same structure. Hardware structures of various terminal devices mentioned in the embodiments of the present invention are described below by using the calling terminal device as an example.

The calling terminal device provided in this embodiment of the present invention may be a mobile phone, a tablet computer, a notebook computer, an ultra-mobile personal computer (ultra-mobile personal computer, UMPC), a netbook, a personal digital assistant (personal digital assistant, PDA), or the like.

For example, in this embodiment of the present invention, a hardware structure of the calling terminal device provided in this embodiment of the present invention is described by using an example in which the calling terminal device shown in FIG. 1 is a mobile phone. Various components of the mobile phone provided in this embodiment of the present invention are described in detail below with reference to FIG. 2. As shown in FIG. 2, the mobile phone provided in this embodiment of the present invention includes components such as a processor 20, a radio frequency (radio frequency, RF) circuit 21, a power source 22, a memory 23, an input unit 24, a display unit 25, and an audio circuit 26. A person skilled in the art may understand that the structure of the mobile phone shown in FIG. 2 does not constitute a limitation on the mobile phone, and the mobile phone may include more or fewer components than those shown in FIG. 2, or some components of the components shown in FIG. 2 may be combined, or a component deployment different from that shown in FIG. 2 may be used.

The processor 20 is a control center of the mobile phone, and is connected to various parts of the mobile phone by using various interfaces and lines. By running or executing a software program and/or a module stored in the memory 23, and invoking data stored in the memory 23, the processor 20 performs various functions of the mobile phone and processes data, thereby performing overall monitoring on the mobile phone. Optionally, the processor 20 may include one or more processing units. Optionally, the processor 20 may integrate an application processor and a modem processor. The application processor mainly processes an operating system, a user interface, an application program, and the like. The modem processor mainly processes wireless communication. It may be understood that the foregoing modem processor may be alternatively a processor independent of the processor 20.

The RF circuit 21 may be configured to receive and send a signal in an information receiving and sending process or during a call. For example, after downlink information of a base station is received, the downlink information is sent to the processor 20 for processing. In addition, uplink data is sent to the base station. Usually, the RF circuit includes, but is not limited to, an antenna, at least one amplifier, a transceiver, a coupler, a low noise amplifier (low noise amplifier, LNA), a duplexer, and the like. In addition, wireless communication between the mobile phone and another device in a network may be implemented by using the RF circuit 21. The wireless communication may use any communications standard or protocol, including, but not limited to, Global system of Mobile Communications (global system of mobile communication, GSM), general packet radio service (general packet radio service, GPRS), Code Division Multiple Access (code division multiple access, CDMA), Wideband Code Division Multiple Access (wideband code division multiple access, WCDMA), LTE, email, short messaging service (Short Messaging Service, SMS), and the like.

The power source 22 may be configured to supply power to various components of the mobile phone. The power source 22 may be a battery. Optionally, the power source may be logically connected to the processor 20 by using a power management system, thereby implementing functions such as charging management, discharging management, and power consumption management by using the power management system.

The memory 23 may be configured to store a software program and a module. The processor 20 runs the software program and the module stored in the memory 23, to implement various functional applications and data processing of the mobile phone. The memory 23 may mainly include a program storage area and a data storage area. The program storage area may store an operating system, an application program required by at least one function (such as a sound playing function and an image display function), and the like. The data storage area may store data (such as audio data, image data, and an address book) created based on use of the mobile phone, and the like. In addition, the memory 23 may include a high-speed random access memory, and may further include a non-volatile memory, such as at least one magnetic disk storage device, a flash storage device, or another volatile solid-state storage device.

The input unit 24 may be configured to: receive input digit or character information, and generate a key signal input related to a user setting and function control of the mobile phone. Specifically, the input unit 24 may include a touchscreen 241 and another input device 242. The touchscreen 241, also referred to as a touch panel, may collect a touch operation of a user on or near the touchscreen (such as an operation of a user on or near the touchscreen 241 by using any suitable object or accessory such as a finger or a stylus), and drive a corresponding connection apparatus based on a preset program. Optionally, the touchscreen 241 may include two parts: a touch detection apparatus and a touch controller. The touch detection apparatus detects a touch position of the user, detects a signal generated by the touch operation, and transfers the signal to the touch controller. The touch controller receives touch information from the touch detection apparatus, converts the touch information into touch point coordinates, and sends the touch point coordinates to the processor 20. Moreover, the touch controller can receive and execute a command sent by the processor 20. In addition, the touchscreen 241 may be implemented in various types such as resistance-type, capacitance-type, infrared, and surface acoustic wave. The another input device 242 may include, but is not limited to, one or more of a physical keyboard, a functional key (such as a volume control key or a power source switch key), a trackball, a mouse, and a joystick.

The display unit 25 may be configured to display information entered by the user or information provided to the user, and various menus of the mobile phone. The display unit 25 may include a display panel 251. Optionally, the display panel 251 may be configured in forms such as a liquid crystal display (liquid crystal display, LCD) and an organic light-emitting diode (organic light-emitting diode, OLED). Further, the touchscreen 241 may cover the display panel 251. After detecting a touch operation on or near the touchscreen 241, the touchscreen 241 transfers the touch operation to the processor 20 to determine a type of a touch event. Subsequently, the processor 20 provides a corresponding visual output on the display panel 251 based on the type of the touch event. Although in FIG. 2, the touchscreen 241 and the output panel 251 implement an input function and an output function of the mobile phone as two independent components, in some embodiments, the touchscreen 241 and the display panel 251 may be integrated to implement the input function and the output function of the mobile phone.

The audio circuit 26, a speaker 261, and a microphone 262 are configured to provide an audio interface between a user and the mobile phone. On one hand, the audio circuit 26 may receive audio data, convert the audio data into an electrical signal, and transmit the electrical signal to the speaker 261, and the speaker 261 converts the electrical signal into a sound signal, and outputs the sound signal. On the other hand, the microphone 262 converts the collected sound signal into an electrical signal. The audio circuit 26 receives the electrical signal, converts the electrical signal into audio data, and then outputs the audio data to the RF circuit 21 by using the processor 20, to send the audio data to, for example, another mobile phone, or outputs the audio data to the memory 23 by using the processor 20 for further processing.

Optionally, the mobile phone shown in FIG. 2 may further include various sensors, for example, a gyroscope sensor, a hygrometer sensor, an infrared sensor, and a magnetometer sensor. Details are not described herein.

Optionally, the mobile phone shown in FIG. 2 may further include a Wireless Fidelity (Wireless Fidelity, Wi-Fi) module, a Bluetooth module, and the like. Details are not described herein.

It should be noted that when the called terminal device 11 shown in FIG. 1 is a mobile phone, a structure of the called terminal device 11 may be the same as the structure of the mobile phone shown in FIG. 2. For detailed descriptions of various components of the called terminal device 11, refer to the related descriptions of the various components of the mobile phone shown in FIG. 2 in the foregoing embodiment. Details are not described herein again.

It should be noted that in the embodiments of the present invention, the first server 12 and the second server 13 that are shown in FIG. 1 may be devices of a same structure, or may be devices of different structures. It is assumed that the first server 12 and the second server 13 are devices of a same structure. Hardware structures of various servers mentioned in the embodiments of the present invention are described below by using the first server as an example.

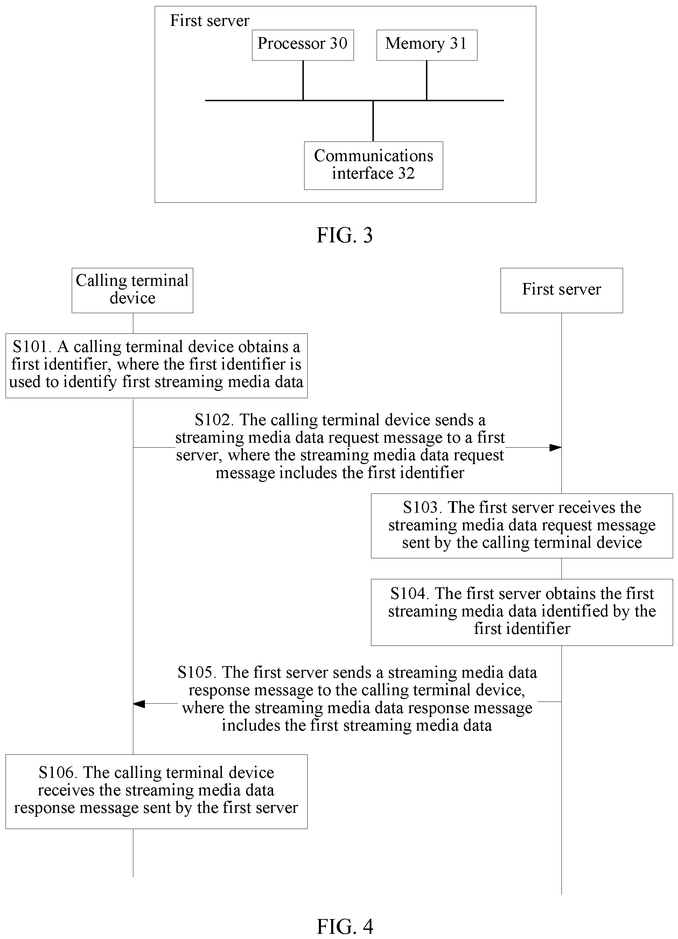

FIG. 3 is a schematic diagram of hardware of a first server according to an embodiment of the present invention. The first server shown in FIG. 3 may include a processor 30, a memory 31, and a communications interface 32.

The processor 30 is a core component of the first server, and is configured to run an operating system of the first server and an application program (including a system application program and a third-party application program) installed in the first server.

In this embodiment of the present invention, the processor 30 may be specifically a central processing unit (central processing unit, CPU), a general purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor 30 can implement or execute various exemplary logical blocks, modules, and circuits described with reference to the content disclosed in the embodiments of the present invention. Alternatively, the processor may be a combination for implementing a computing function, for example, a combination including one or more microprocessors or a combination of a DSP and a microprocessor.

The memory 31 is configured to store program code and data of the first server.

In this embodiment of the present invention, the memory 31 may specifically include a volatile memory (volatile memory), for example, a random access memory (random-access memory, RAM). The memory may alternatively include a non-volatile memory (non-volatile memory), for example, a read-only memory (read-only memory, ROM), a flash memory (flash memory), a hard disk drive (hard disk, HDD), or a solid-state drive (solid-state disk, SSD). The memory may alternatively include a combination of the foregoing memories.

The communications interface 32 is an interface circuit used by the first server to communicate with another device. The communications interface may be of a structure having a receiving/transmission function, such as a transceiver or a transceiver circuit. The communications interface includes a serial communications interface and a parallel communications interface.

It should be noted that because a structure of the server 12 shown in FIG. 1 may be the same as a structure of the first server shown in FIG. 3, for detailed descriptions of various components of the server 12, refer to related descriptions of various components of the first server shown in FIG. 3 in the foregoing embodiment. Details are not described herein again.

With reference to application scenarios (that is, the foregoing mobile communication scenario and the foregoing Internet communication scenario) of the foregoing communications system and the streaming media data obtaining method that is provided in the embodiments of the present invention, technical solutions provided in the embodiments of the present invention are described below by using examples.

With reference to FIG. 1, as shown in FIG. 4, a streaming media data obtaining method provided in an embodiment of the present invention may include S101 to S106.

S101. A calling terminal device obtains a first identifier, where the first identifier is used to identify first streaming media data.

In this embodiment of the present invention, when the calling terminal device calls a called terminal device, in a process in which the calling terminal device waits for a response of the called terminal device to the call of the calling terminal device, the calling terminal device may play a segment of streaming media data (in the mobile communication scenario, the streaming media data may be usually referred to as a multimedia ring back tone). The streaming media data may be streaming media data (that is, first streaming media data provided in this embodiment of the present invention) identified by an identifier (that is, a first identifier provided in this embodiment of the present invention) that is set in the calling terminal device or the called terminal device.

It should be noted that in this embodiment of the present invention, the first identifier that is obtained by the calling terminal device and that is used to identify the first streaming media data may be an identifier that is set in the calling terminal device, or may be an identifier that is set in the called terminal device. This may be specifically selected based on a playing requirement of the calling terminal device, and is not limited in this embodiment of the present invention.

Optionally, in this embodiment of the present invention, the first identifier may be a uniform resource locator (Uniform Resource Locator, URL) of streaming media data. In a segment of time, the URL of the streaming media data and the streaming media data are in a one-to-one correspondence. That is, in a segment of time, the URL of the streaming media data may uniquely identify the streaming media data. The calling terminal device obtains a first URL. In addition, the calling terminal device may request, based on the first URL, a first server for streaming media data (that is, the first streaming media data) corresponding to the first URL. In this way, the calling terminal device may obtain the first streaming media data.

It should be noted that in this embodiment of the present invention, the first identifier may alternatively be another identifier that may be used to uniquely identify the first streaming media data. This may be specifically determined based on an actual situation, and is not limited in this embodiment of the present invention.

S102. The calling terminal device sends a streaming media data request message to a first server, where the streaming media data request message includes the first identifier.

In this embodiment of the present invention, after obtaining the first identifier, the calling terminal device may send, to the first server (which may be, for example, understood as a server of a multimedia website), a request message (which is referred to as the streaming media data request message below) used to request the first streaming media data, and further obtain the first streaming media data from the first server. Specifically, the calling terminal device may add the first identifier obtained by the calling terminal device to the streaming media data request message, and send the streaming media data request message carrying the first identifier to the first server.

S103. The first server receives the streaming media data request message sent by the calling terminal device.

S104. The first server obtains the first streaming media data identified by the first identifier.

S105. The first server sends a streaming media data response message to the calling terminal device, where the streaming media data response message includes the first streaming media data.

In this embodiment of the present invention, after receiving the streaming media data request message sent by the calling terminal device, the first server may obtain the first streaming media data identified by the first identifier in the streaming media data request message, add the first streaming media data to the streaming media data response message, and send the streaming media data response message carrying the first streaming media data to the calling terminal device.

Optionally, in this embodiment of the present invention, after receiving the streaming media data request message that is sent by the calling terminal device and that includes the first identifier and obtaining the first streaming media data identified by the first identifier, the first server may encode the first streaming media data by using an encoding and decoding mode prescribed with the calling terminal device, so that after the calling terminal device receives the first streaming media data sent by the first server, the calling terminal device may decode the first streaming media data based on the prescribed encoding and decoding mode, and play the first streaming media data.

For example, an example in which the first streaming media data is video data is used. In this embodiment of the present invention, an encoding and decoding mode of the video data may be an encoding and decoding mode stipulated by the Moving Picture Experts Group (Moving Picture Experts Group, MPEG), for example, MPEG-1, MPEG-2, or MPEG-4; an encoding and decoding mode of the video data may be an encoding and decoding mode of H.26X series, for example, H.261, H.263, or H.264; or an encoding and decoding mode of the video data may be another encoding and decoding mode. In actual application, the first server may encode the first streaming media data by using a video encoding and decoding mode supported by the calling terminal device.

S106. The calling terminal device receives the streaming media data response message sent by the first server.

In this embodiment of the present invention, after receiving the streaming media data response message sent by the first server, the calling terminal device may obtain the first streaming media data from the streaming media data response message, and further may play the first streaming media data.

It should be noted that in this embodiment of the present invention, when data traffic of the first streaming media data is relatively small, the first server may add the first streaming media data to the streaming media data response message, and send the streaming media data response message carrying the first streaming media data to the calling terminal device at a time. When the data traffic of the first streaming media data is relatively large, the first server may divide the first streaming media data into a plurality of different streaming media data segments, and add the plurality of different streaming media data segments to a plurality of streaming media data response messages (for example, the first server may add one streaming media data segment to one streaming media data response message), and sequentially send the plurality of streaming media data response messages to the calling terminal device, thereby finishing sending the first streaming media data. When sending the plurality of streaming media data response messages to the calling terminal device, the first server may send the plurality pieces of streaming media data to the calling terminal device at a bit rate. That is, the first server may send the first streaming media data to the calling terminal device at a bit rate.

In this embodiment of the present invention, usually, a period of time during which the calling terminal device waits for the response of the called terminal device to the call of the calling terminal device is a preset segment of time (which is briefly referred to as a preset waiting time segment below). In the preset waiting time segment, the called terminal device may respond to (that is, accept or reject) the call of the calling terminal device, or may not respond to the call of the calling terminal device.

If the called terminal device responds to the call of the calling terminal device in the preset waiting time segment, after the called terminal device responds to the call of the calling terminal device, the calling terminal device may stop playing the first streaming media data, so that a communication connection is successfully established between the calling terminal device and the called terminal device or a communication connection is unsuccessfully established between the calling terminal device and the called terminal device.

If the called terminal device has not responded to the call of the calling terminal device in the preset waiting time segment, if a playing time that may be supported by the first streaming media data is less than or equal to the preset waiting time segment, the calling terminal device may repeatedly play the first streaming media data in the preset waiting time segment; or the calling terminal device may stop playing the first streaming media data after playing the first streaming media data once. If the playing time that may be supported by the first streaming media data is greater than the preset waiting time segment, the calling terminal device may play partial content of the first streaming media data in the preset waiting time segment.

In the streaming media data obtaining method provided in this embodiment of the present invention, after the calling terminal device calls the called terminal device, in the process in which the calling terminal device waits for the response of the called terminal device to the call of the calling terminal device, the calling terminal device may obtain the first identifier used to identify the first streaming media data. Then, the calling terminal device may add the first identifier to the streaming media data request message used to request the first streaming media data, and send the streaming media data request message carrying the first identifier to the first server. After receiving the streaming media data request message sent by the calling terminal device, the first server may add the first streaming media data identified by the first identifier to the streaming media data response message, and send the streaming media data response message carrying the first streaming media data to the calling terminal device. Then, the calling terminal device may obtain the first streaming media data from the streaming media data response message. Compared with the prior art, in this embodiment of the present invention, because the calling terminal device may obtain the identifier (that is, the first identifier) of the first streaming media data and request the first server for the first streaming media data based on the first identifier, the calling terminal device does not need to obtain the first streaming media data from a second server (that is, a server in which the calling terminal device or the called terminal device customizes streaming media data), so that the second server does not need to send the first streaming media data to the calling terminal device. Therefore, a bandwidth of the second server occupied in a process of obtaining streaming media data can be reduced.

Further, because the calling terminal device may request the first server for the first streaming media data based on the first identifier obtained by the calling terminal device, and receive the first streaming media data sent by the first server, that is, the calling terminal device does not need to obtain the first streaming media data from the second server (that is, a server of an operator), the operator does not need to purchase and save a large amount of streaming media data. Therefore, costs of providing streaming media data by the operator can be reduced.

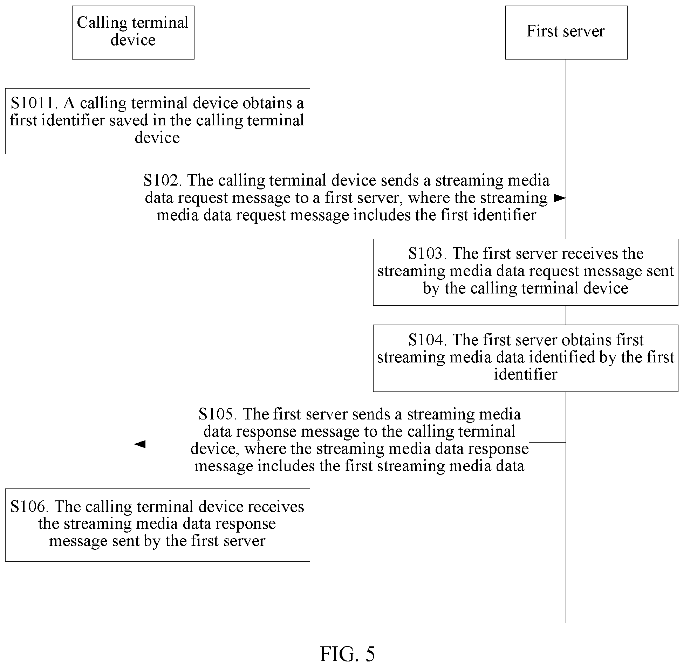

With reference to FIG. 4, as shown in FIG. 5, in this embodiment of the present invention, if the foregoing first identifier is a first identifier that is set in a calling terminal device, S101 may be specifically implemented by using S1011:

S1011. The calling terminal device obtains the first identifier saved in the calling terminal device.

In this embodiment of the present invention, the calling terminal device may save an identifier (that is, the first identifier) of first streaming media data in the calling terminal device. When the calling terminal device calls the called terminal device, the calling terminal device may obtain the first identifier saved in the calling terminal device, and further obtain the first streaming media data from the first server based on the first identifier.

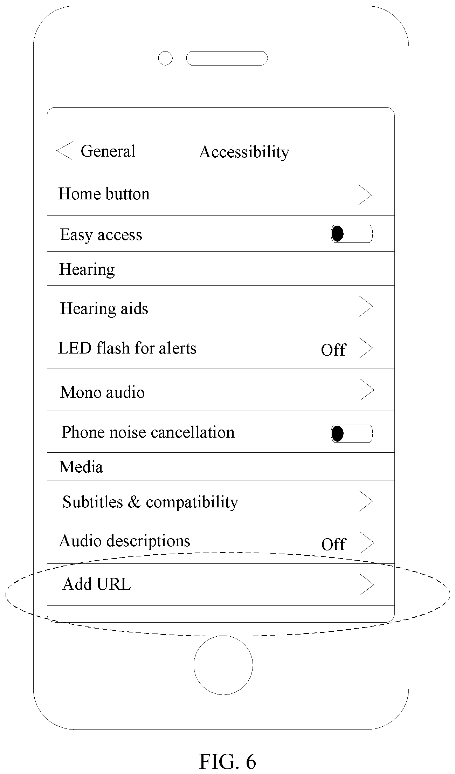

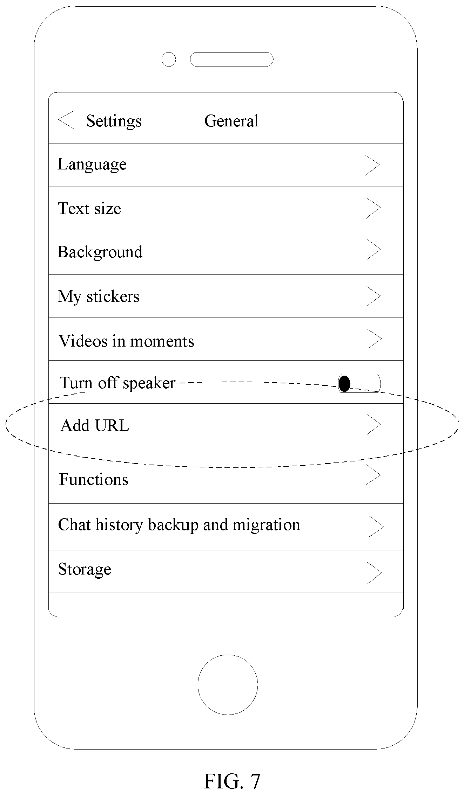

For example, in a mobile communication scenario, the calling terminal device may set, for the calling terminal device, an identifier, that is, the first identifier, of the first streaming media data in setting software of the calling terminal device. For example, as shown in FIG. 6, it is assumed that the calling terminal device is a smartphone. An option (an example in which an option of adding the first identifier is an option of adding a URL is used for illustration in FIG. 6) that may be used to add the first identifier may be set under a media option in a setting interface of the smartphone, so as to be used to set the first identifier. In an Internet communication scenario, the calling terminal device may set, in a setting module in network telephony software or social software installed in the calling terminal device, the identifier of the first streaming media data for the calling terminal device. For example, as shown in FIG. 7, social software installed in the calling terminal device is used as an example. An option (an example in which an option of adding the first identifier is an option of adding a URL is used for illustration in FIG. 7) that may be used to add the first identifier may be set in a setting module of the social software, so as to be used to set the first identifier.

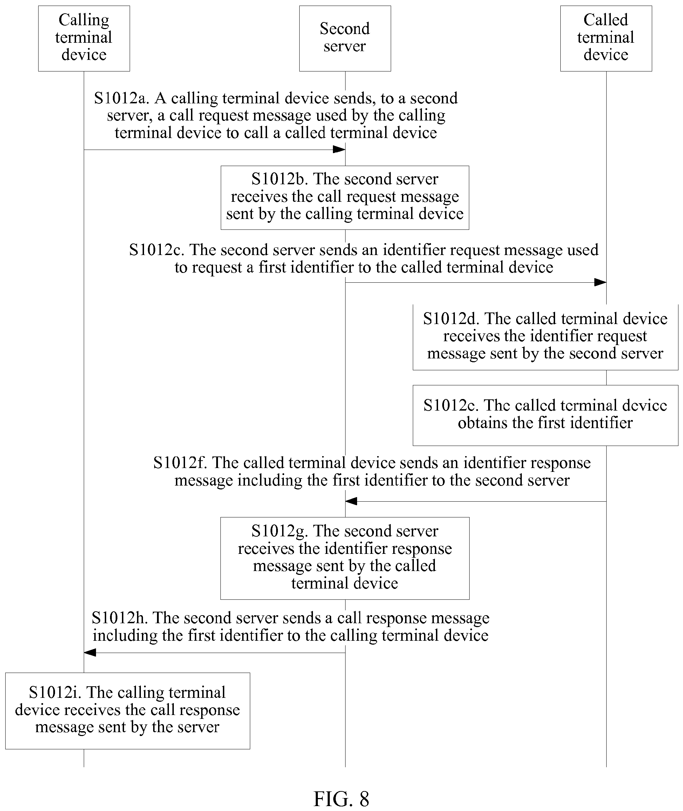

As shown in FIG. 8, in this embodiment of the present invention, if the foregoing first identifier is a first identifier that is set in a called terminal device, S101 may be specifically implemented by using S1012a to S1012i.

S1012a. A calling terminal device sends, to a second server, a call request message used by the calling terminal device to call the called terminal device.

S1012b. The second server receives the call request message sent by the calling terminal device.

In a mobile communication scenario, the second server may be a server of an operator of mobile communication. For example, the second server may be a server integrated with a function of a core network device and a function of a multimedia ring back tone server.

In this embodiment of the present invention, in the mobile communication scenario, when the calling terminal device calls the called terminal device, the calling terminal device may send, to the second server, the call request message used to call the called terminal device. Specifically, after receiving the call request message sent by the calling terminal device, the second server determines, based on subscription information of the called terminal device saved in the second server, that the called terminal device has applied for a streaming media data service (that is, a multimedia ring back tone service). Then, the second server may obtain the first identifier (which may uniquely identify first streaming media data) from the called terminal device and send the first identifier to the calling terminal device, so that the calling terminal device may obtain the first streaming media data from a first server based on the first identifier and play the first streaming media data. A core network function unit, which has a function of a core network device, in the second server may receive the call request message sent by the calling terminal device. Then, the core network function unit determines, based on the subscription information of the called terminal device saved in the core network function unit, that the called terminal device has applied for the streaming media data service. Then, the core network function unit sends a command message including a user identifier of the calling terminal device and a user identifier of the called terminal device (that is, a phone number of the calling terminal device and a phone number of the called terminal device) to a multimedia ring back tone function unit, which has the function of the multimedia ring back tone server, in the second server. The command message is used to indicate that the multimedia ring back tone function unit in the second server provides the first streaming media data to the calling terminal device.

S1012c. The second server sends an identifier request message used to request the first identifier to the called terminal device.

In this embodiment of the present invention, after receiving the call request message sent by the calling terminal device and learning that the called terminal device called by the calling terminal device has applied for the streaming media data service, the second server may send the identifier request message to the called terminal device. The identifier request message is used to request the called terminal device for the first identifier.

S1012d. The called terminal device receives the identifier request message sent by the second server.

S1012e. The called terminal device obtains the first identifier.

In this embodiment of the present invention, after receiving the identifier request message that is sent by the second server and that is used to request the called terminal device for the first identifier, the called terminal device may obtain, based on an indication of the identifier request message, the first identifier saved in the called terminal device.

In this embodiment of the present invention, the calling terminal device that may call the called terminal device may be identified by using an identifier. For example, in the mobile communication scenario, the calling terminal device that may call the called terminal device may be identified by using a phone number. In an Internet communication scenario, the calling terminal device that may call the called terminal device may be identified by using a phone number of the calling terminal device, and an account number or a user name of social software installed in the calling terminal device.

Optionally, in this embodiment of the present invention, the called terminal device may set a same identifier of streaming media data for all calling terminal devices that may call the called terminal device (for example, may set the first identifier for all the calling terminal devices), or the called terminal device may set a different identifier of streaming media data for each of all calling terminal devices that may call the called terminal device.

In this embodiment of the present invention, when the called terminal device sets a same identifier of streaming media data for all the calling terminal devices that may call the called terminal device, for example, in the mobile communication scenario, the called terminal device may set, in setting software of the called terminal device, a same identifier, that is, the first identifier, of streaming media data for all the calling terminal devices that may call the called terminal device. For example, referring to FIG. 6, it is assumed that the called terminal device is a smartphone. An option (an example in which an option of adding the first identifier is an option of adding a URL is used for illustration in FIG. 6) that may be used to add the first identifier may be set under a media option in a setting interface of the smartphone, so as to set the first identifier. In the Internet communication scenario, the called terminal device may set, in a setting module in network telephony software or social software installed in the called terminal device, an identifier, that is, the first identifier, of the first streaming media data for all the calling terminal devices that may call the called terminal device. For example, referring to FIG. 7, social software installed in the called terminal device is used as an example. An option (an example in which an option of adding the first identifier is an option of adding a URL is used for illustration in FIG. 7) that may be used to add the first identifier may be set in a setting module of the social software, so as to set the first identifier.

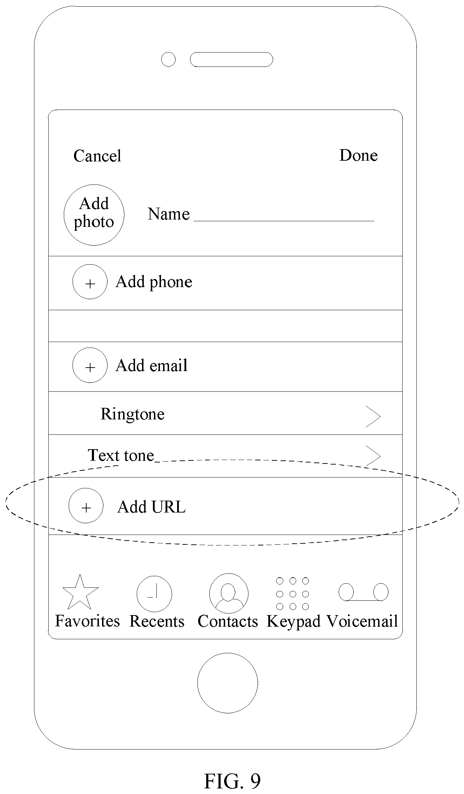

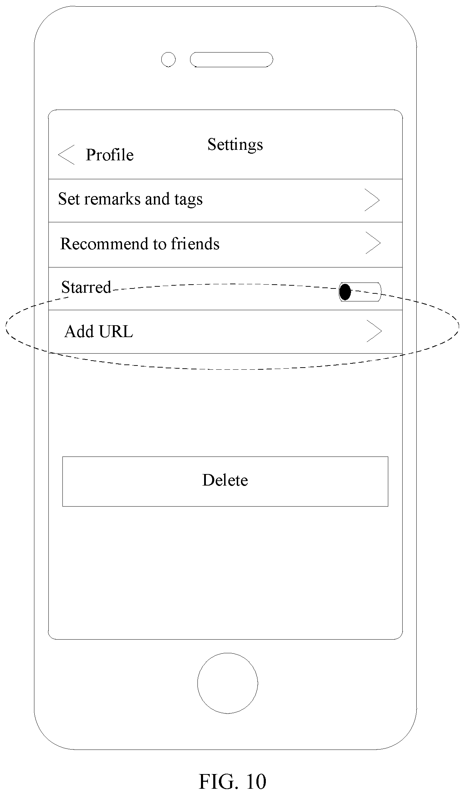

In this embodiment of the present invention, when the called terminal device sets a different identifier of streaming media data for each of all the calling terminal devices that may call the called terminal device, for example, in the mobile communication scenario, the called terminal device may set a different identifier of streaming media data for each phone number (which may be understood as each calling terminal device corresponding to each phone number) saved in an address book of the called terminal device. An example in which the called terminal device sets the first identifier for a phone number (that is, a calling terminal device) saved in the called terminal device is used. The called terminal device may set, in a module for saving the phone number in the address book of the called terminal device, the first identifier. For example, as shown in FIG. 9, it is assumed that the called terminal device is a smartphone, the first identifier (an example in which the first identifier is a URL is used for illustration in FIG. 9) may be added to an editing module for saving the phone number of the calling terminal device in the address book of the smartphone. In the Internet communication scenario, the called terminal device may set, in network telephony software or social software installed in the called terminal device, a different identifier of streaming media data for each phone number, account number, or user name (which may be understood as each calling terminal device corresponding to the phone number, account number, or user name) saved in the address book of the network telephony software or the social software. For example, as shown in FIG. 10, social software installed in the called terminal device is used as an example. An option (an example in which an option of adding the first identifier is an option of adding a URL is used for illustration in FIG. 10) that may be used to add the first identifier may be set in a data setting module for saving the user name of the calling terminal device in an address book of the social software, so as to be used to set the first identifier.

S1012f. The called terminal device sends an identifier response message to the second server, where the identifier response message includes the first identifier.

In this embodiment of the present invention, a response message to the identifier request message is a reply from the called terminal device to the identifier request message that is received by the called terminal device and that is sent by the second server. After obtaining the first identifier saved in the called terminal device, the called terminal device may add the first identifier to the identifier response message, and send the identifier response message carrying the first identifier to the second server.

S1012g. The second server receives the identifier response message sent by the called terminal device.

S1012h. The second server sends a call response message to the calling terminal device, where the call response message includes the first identifier.

The call response message is a response message to the call request message, that is, a reply from the second server to the call request message that is received by the second server and that is sent by the calling terminal device. After receiving the identifier response message sent by the called terminal device and obtaining the first identifier from the identifier response message, the second server may add the first identifier to the call response message and send the call response message carrying the first identifier to the calling terminal device.

S1012i. The calling terminal device receives the call response message sent by the second server.

In this embodiment of the present invention, after receiving the call response message sent by the second server, the calling terminal device may obtain the first identifier from the call response message, and further may obtain the first streaming media data from the first server based on the first identifier.

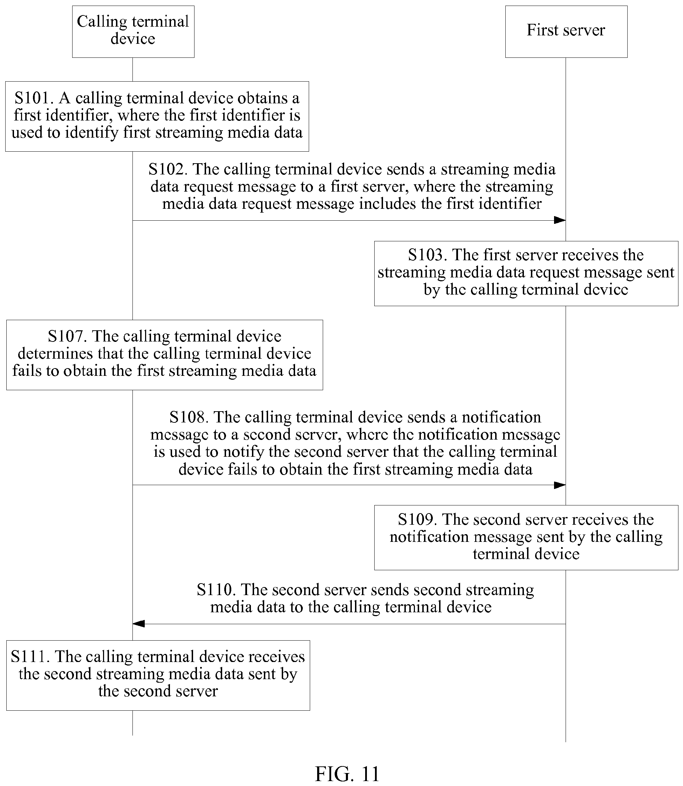

In this embodiment of the present invention, after S103, the calling terminal device may have not received the first streaming media data sent by the first server (that is, the calling terminal device fails to obtain the streaming media data). In this case, with reference to FIG. 4, as shown in FIG. 11, the streaming media data obtaining method provided in this embodiment of the present invention may further include S107 to S111 after S103.

S107. The calling terminal device determines that the calling terminal device fails to obtain the first streaming media data.

In this embodiment of the present invention, in a process in which the calling terminal device obtains the first streaming media data, after the calling terminal device sends the streaming media data request message to the first server, if the calling terminal device cannot obtain the first streaming media data due to a network anomaly (for example, network congestion or network connection interruption) or another reason, the calling terminal device determines that the calling terminal device fails to obtain the first streaming media data.

Optionally, in this embodiment of the present invention, in either of the following two situations (recorded as A1 and A2), the calling terminal device may determine that the calling terminal device fails to obtain the first streaming media data.

A1. If the calling terminal device receives, in a preset time segment, an error response message sent by the first server, the calling terminal device determines that the calling terminal device fails to obtain the first streaming media data.

The error response message is a response message to the streaming media data request message (that is, the streaming media data request message that is sent by the calling terminal device to the first server and that includes the first identifier in S102). The error response message is used to indicate that the first server fails to obtain the first streaming media data.

It should be noted that in this embodiment of the present invention, the error response message received by the calling terminal device is a response message to the streaming media data request message. In S106, the calling terminal device receives the streaming media data response message sent by the first server, and the streaming media data response message is also a response message to the streaming media data request message. As can be learned, the streaming media data response message and the error response message are both response messages to the streaming media data request message. A difference is that when the calling terminal device receives the streaming media data response message sent by the first server, because the streaming media data response message includes the first streaming media data, the streaming media data response message may indicate that the calling terminal device succeeds in obtaining the first streaming media data; and when the calling terminal device receives the error response message sent by the first server, because an identifier in the error response message indicates that the first server has not obtained the first streaming media data, that is, indicates that the first server cannot provide the first streaming media data to the calling terminal device, the error response message may indicate that the calling terminal device fails to obtain the first streaming media data.

In this embodiment of the present invention, the calling terminal device sends the streaming media data request message to the first server. After the first server receives the streaming media data request message, if the first server determines that the first server cannot provide the first streaming media data to the calling terminal device, the first server may send the error response message to the calling terminal device, to notify the calling terminal device that the first server cannot provide the first streaming media data to the calling terminal device.

For example, when the first server does not find, in the first server based on the first identifier in the streaming media data request message, the first streaming media data identified by the first identifier (that is, the first streaming media data is not saved in the first server), the first server may send the error response message to the calling terminal device, to notify the calling terminal device that the first server cannot provide the first streaming media data to the calling terminal device. Alternatively, when the first server finds, based on the first identifier, the first streaming media data identified by the first identifier, but the calling terminal device has no permission to access the first streaming media data, the first server may send the error response message to the calling terminal device, to notify the calling terminal device that the first server cannot provide the first streaming media data to the calling terminal device. For example, the first streaming media data is streaming media data that may be accessed by some particular terminal devices (for example, in the server, terminal devices that have a membership of a website of saving the first streaming media data). If the calling terminal device is not a member of the website, the calling terminal device has no permission to access the first streaming media data.

In this embodiment of the present invention, the first server may set an identifier in the error response message, to notify the calling terminal device that the first server cannot provide the first streaming media data to the calling terminal device. After receiving the error response message, the calling terminal device may learn, based on the identifier in the error response message, that the first streaming media data requested by the calling terminal device is not saved in the first server. For example, in this embodiment of the present invention, the identifier in the error response message may be specifically indicated by using "0" or "1". For example, "0" may be used to indicate that the first server cannot provide the first streaming media data to the calling terminal device, or "1" may be used to indicate that the first server cannot provide the first streaming media data to the calling terminal device. Certainly, in this embodiment of the present invention, the identifier in the error response message may be further set by using other identifiers satisfying an actual use requirement. The other identifiers are not listed one by one in this embodiment of the present invention.

A2. If the calling terminal device has not received, in the preset time segment, the streaming media data response message and the error response message that are sent by the first server, the calling terminal device determines that the calling terminal device fails to obtain the first streaming media data.

In this embodiment of the present invention, after the calling terminal device sends the streaming media data request message to the first server, if a network serving the calling terminal device and the first server is normal, the calling terminal device may receive, in the preset time segment, a response message (that is, the streaming media data response message or the error response message) sent by the first server. If the network serving the calling terminal device and the first server is abnormal (for example, the network is congested or a network connection is interrupted), the calling terminal device may have received, in the preset time segment, neither the streaming media data response message sent by the first server, nor the error response message sent by the first server, that is, the calling terminal device has not received any response message in the preset time segment. In this case, the calling terminal device may determine that the calling terminal device fails to obtain the first streaming media data.

In this embodiment of the present invention, by using A1 or A2, the calling terminal device may determine that the calling terminal device fails to obtain the first streaming media data from the first server. Therefore, the calling terminal device may obtain second streaming media data from the second server and play the second streaming media data. Further, in a process in which the calling terminal device waits for a response of the called terminal device to a call of the calling terminal device, the first streaming media data is played on the calling terminal device.

S108. The calling terminal device sends a notification message to the second server, where the notification message is used to notify the second server that the calling terminal device fails to obtain the first streaming media data.

S109. The second server receives the notification message sent by the calling terminal device.

In this embodiment of the present invention, after determining that the calling terminal device fails to obtain the first streaming media data, the calling terminal device may notify the second server that the calling terminal device fails to obtain the first streaming media data. Further, the calling terminal device may obtain the second streaming media data from the second server. Specifically, the calling terminal device may send the notification message to the second server. After receiving the notification message, the second server may determine that the calling terminal device fails to obtain the first streaming media data. Further, the second server may provide the second streaming media data to the calling terminal device, so that the calling terminal device may play a segment of streaming media data (that is, the second streaming media data obtained by the calling terminal device from the second server) in the process of waiting for the response of the called terminal device to the call of the calling terminal device.

S110. The second server sends second streaming media data to the calling terminal device.

In this embodiment of the present invention, the second streaming media data is streaming media data that is customized by the calling terminal device or the called terminal device in the second server. For example, in the mobile communication scenario, after applying for a streaming media data service on the second server, the calling terminal device or the called terminal device may customize, in the second server, the streaming media data that is played on the calling terminal device in the process in which the calling terminal device waits for the response of the called terminal device to the call of the calling terminal device.

It should be noted that in this embodiment of the present invention, the second streaming media data sent by the second server to the calling terminal device may be streaming media data customized by the calling terminal device in the second server, or may be streaming media data customized by the called terminal device. This may be specifically determined based on an actual situation, and is not limited in this embodiment of the present invention.

Sill. The calling terminal device receives the second streaming media data sent by the second server.

In the streaming media data obtaining method provided in this embodiment of the present invention, the calling terminal device may send the notification message to the second server, to notify the second server that the calling terminal device fails to obtain the streaming media data. Then, after receiving the notification message sent by the calling terminal device, the second server may send, to the calling terminal device, the second streaming media data that is customized by the calling terminal device or the called terminal device in the second server. Further, the calling terminal device may obtain the second streaming media data and play the second streaming media data. Therefore, if the calling terminal device determines that the calling terminal device fails to obtain the first streaming media data from the first server, the calling terminal device may further obtain the second streaming media data from the second server, to ensure that the calling terminal device successfully plays the streaming media data in the process in which the calling terminal device waits for a response of the called terminal device to a call of the calling terminal device.

In this embodiment of the present invention, S104 to S106 are a situation in which the calling terminal device succeeds in obtaining the first streaming media data from the first server, and S107 to Sill are a situation in which the calling terminal device fails to obtain the first streaming media data from the first server. In this way, in this embodiment of the present invention, either S1 04 to S1 06 or S107 to Sill may be performed. That is, in this embodiment of the present invention, S104 to S106 or S107 to Sill may be performed.

The foregoing describes the solutions provided in the embodiments of the present invention mainly from the perspective of interaction between network elements. It may be understood that to implement the foregoing functions, each network element such as the calling terminal device or the called terminal device includes a corresponding hardware structure and/or software module for executing the foregoing functions. A person skilled in the art should be easily aware that, in combination with examples of units and algorithm steps described in the embodiments disclosed in this specification, the embodiments of the present invention can be implemented in a form of hardware or a form of a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of the present invention, functional modules of the calling terminal device and the called terminal device may be divided based on the foregoing method examples. For example, the functional modules may be divided corresponding to functions, or two or more functions may be integrated in one processing module. The integrated module may be implemented in a form of hardware, or may be implemented in a form of a software functional module. It should be noted that the module division in the embodiments of the present invention is an example, and is merely logical function division. There may be another division manner in an actual implementation.

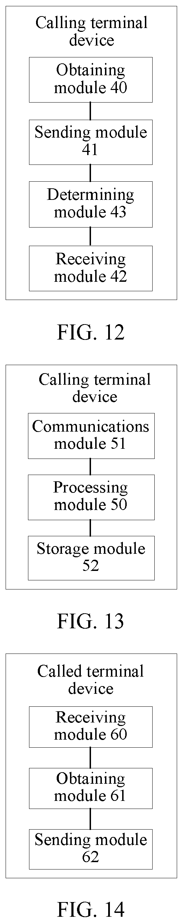

When the functional modules are divided corresponding to the functions, FIG. 12 is a possible schematic structural diagram of the calling terminal device mentioned in the foregoing embodiment. As shown in FIG. 12, the calling terminal device may include: an obtaining module 40, a sending module 41, and a receiving module 42. The obtaining module 40 may be configured to support the calling terminal device in performing S101 (including S1011 or including S1012a and S1012i) in the foregoing method embodiment. The sending module 41 may be configured to support the calling terminal device in performing S102 and S108 in the foregoing method embodiment. The receiving module 42 may be configured to support the calling terminal device in performing S106 and Sill in the foregoing method embodiment. Optionally, as shown in FIG. 12, the calling terminal device may further include a determining module 43. The determining module 43 may be configured to support the calling terminal device in performing S107 in the foregoing method embodiment. All related content of the steps mentioned in the foregoing method embodiment may be quoted for the functional descriptions of the corresponding functional modules. Details are not described herein again.

When an integrated unit is used, FIG. 13 is a possible schematic structural diagram of the calling terminal device mentioned in the foregoing embodiment. As shown in FIG. 13, the calling terminal device may include a processing module 50 and a communications module 51. The processing module 50 may be configured to control and manage an action of the calling terminal device. For example, the processing module 50 may be configured to support the calling terminal device in performing S101 and S107 in the foregoing method embodiment, and/or applied to other processes of the technology described in this specification. The communications module 51 may be configured to support communication between the calling terminal device and another network entity. For example, the communications module 51 may be configured to support the calling terminal device in performing S102, S106, and S108 in the foregoing method embodiment. Optionally, as shown in FIG. 13, the calling terminal device may further include a storage module 52 configured to store program code and data of the calling terminal device.

The processing module 50 may be a processor or a controller (for example, may be the processor 20 shown in FIG. 2), for example, may be a CPU, a general purpose processor, a DSP, an ASIC, an FPGA or another programmable logic device, a transistor logic device, a hardware component, or any combination thereof. The processing module can implement or execute various exemplary logical blocks, modules, and circuits described with reference to the content disclosed in the embodiments of the present invention. Alternatively, the processor may be a combination for implementing a computing function, for example, a combination including one or more microprocessors or a combination of a DSP and a microprocessor. The communications module 51 may be a transceiver, a transceiver circuit, a communications interface, or the like (for example, may be the RF circuit 21 shown in FIG. 2). The storage module 52 may be a memory (for example, may be the memory 23 shown in FIG. 2).

When the functional modules are divided corresponding to the functions, FIG. 14 is a possible schematic structural diagram of the called terminal device mentioned in the foregoing embodiment. As shown in FIG. 14, the called terminal device may include: a receiving module 60, an obtaining module 61, and a sending module 62. The receiving module 60 may be configured to support the called terminal device in performing S1012d in the foregoing method embodiment. The obtaining module 61 may be configured to support the called terminal device in performing S1012e in the foregoing method embodiment. The sending module 62 may be configured to support the called terminal device in performing S1012f in the foregoing method embodiment. All related content of the steps mentioned in the foregoing method embodiment may be quoted for the functional descriptions of the corresponding functional modules. Details are not described herein again.

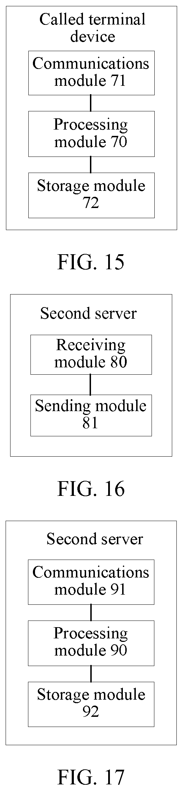

When an integrated unit is used, FIG. 15 is a possible schematic structural diagram of the called terminal device mentioned in the foregoing embodiment. As shown in FIG. 15, the called terminal device may include a processing module 70 and a communications module 71. The processing module 70 may be configured to control and manage an action of the called terminal device. For example, the processing module 70 may be configured to support the terminal in performing S1012e in the foregoing method embodiment, and/or applied to other processes of the technology described in this specification. The communications module 71 may be configured to support communication between the terminal and another network entity. For example, the communications module 71 may be configured to support the called terminal device in performing S1012d and S1012f in the foregoing method embodiment. Optionally, as shown in FIG. 15, the called terminal device may further include a storage module 72 configured to store program code and data of the called terminal device.

The processing module 70 may be a processor or a controller (for example, may be the processor 20 shown in FIG. 2), for example, may be a CPU, a general purpose processor, a DSP, an ASIC, an FPGA or another programmable logic device, a transistor logic device, a hardware component, or any combination thereof. The processing module can implement or execute various exemplary logical blocks, modules, and circuits described with reference to the content disclosed in the embodiments of the present invention. Alternatively, the processor may be a combination for implementing a computing function, for example, a combination including one or more microprocessors or a combination of a DSP and a microprocessor. The communications module 71 may be a transceiver, a transceiver circuit, a communications interface, or the like (for example, may be the RF circuit 21 shown in FIG. 2). The storage module 72 may be a memory (for example, may be the memory 23 shown in FIG. 2).

When the functional modules are divided corresponding to the functions, FIG. 16 is a possible schematic structural diagram of the server (that is, the second server) mentioned in the foregoing embodiment. As shown in FIG. 16, the second server may include a receiving module 80 and a sending module 81. The receiving module 80 may be configured to support the second server in performing S1012b and S1012g in the foregoing method embodiment. The sending module 81 may be configured to support the second server in performing S1012c and S1012h in the foregoing method embodiment. All related content of the steps mentioned in the foregoing method embodiment may be quoted for the functional descriptions of the corresponding functional modules. Details are not described herein again.

When an integrated unit is used, FIG. 17 is a possible schematic structural diagram of the second server mentioned in the foregoing embodiment. As shown in FIG. 17, the second server may include a processing module 90 and a communications module 91. The processing module 90 may be configured to control and manage an action of the second server. The communications module 91 may be configured to support communication between the second server and another network entity. For example, the communications module 91 may be configured to support the second server in performing S1012b, S1012c, S1012h, and S1012g in the foregoing method embodiment. Optionally, as shown in FIG. 17, the second server may further include a storage module 92 configured to store program code and data of the second server.

The processing module 90 may be a processor or a controller (for example, may be the processor 30 shown in FIG. 3). The communications module 91 may be a transceiver, a transceiver circuit, a communications interface, or the like (for example, may be the communications interface 32 shown in FIG. 3). The storage module 92 may be a memory (for example, may be the memory 31 shown in FIG. 3).

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium, or may be transmitted from one computer-readable storage medium to another computer-readable storage medium. For example, the computer instructions may be transmitted from one website, computer, server, or data center to another website, computer, server, or data center in a wired (for example, a coaxial cable, a fiber, a digital subscriber line (digital subscriber line, DSL)) manner or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid-state drive (solid state drives, SSD)), or the like.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or part of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A streaming media data obtaining method, comprising:
obtaining, by a calling terminal device, a first identifier, wherein the first identifier is used to identify first streaming media data, and the first streaming media data is streaming media data that is played on the calling terminal device when the calling terminal device calls a called terminal device;
sending, by the calling terminal device, a streaming media data request message to a first server, wherein the streaming media data request message comprises the first identifier, and the streaming media data request message is used to request the first streaming media data; and
receiving, by the calling terminal device, a streaming media data response message sent by the first server, wherein the streaming media data response message comprises the first streaming media data.

2. The method according to claim 1, wherein the first identifier is an identifier that is set in the called terminal device; and
the obtaining, by a calling terminal device, a first identifier comprises:
sending, by the calling terminal device, a call request message to a second server, wherein the call request message is used by the calling terminal device to call the called terminal device; and
receiving, by the calling terminal device, a call response message sent by the second server, wherein the call response message comprises the first identifier, and the first identifier is obtained from the called terminal device after the second server receives the call request message.

3. The method according to claim 1, wherein the first identifier is an identifier that is set in the calling terminal device; and
the obtaining, by a calling terminal device, a first identifier comprises:
obtaining, by the calling terminal device, the first identifier saved in the calling terminal device.

4. The method according to any one of claims 1 to 3, wherein the method further comprises:
determining, by the calling terminal device, that the calling terminal device fails to obtain the first streaming media data.

5. The method according to claim 4, wherein the determining, by the calling terminal device, that the calling terminal device fails to obtain the first streaming media data comprises:
if the calling terminal device receives, in a preset time segment, an error response message sent by the first server, determining, by the calling terminal device, that the calling terminal device fails to obtain the first streaming media data, wherein the error response message is used to indicate that the first server fails to obtain the first streaming media data; or
if the calling terminal device has not received, in the preset time segment, the streaming media data response message and the error response message that are sent by the first server, determining, by the calling terminal device, that the calling terminal device fails to obtain the first streaming media data.

6. The method according to claim 4 or 5, wherein after the determining, by the calling terminal device, that the calling terminal device fails to obtain the first streaming media data, the method further comprises:
sending, by the calling terminal device, a notification message to the second server, wherein the notification message is used by the calling terminal device to notify the second server that the calling terminal device fails to obtain the first streaming media data; and
receiving, by the calling terminal device, second streaming media data sent by the second server, wherein the second streaming media data is streaming media data that is customized by the calling terminal device or the called terminal device in the second server.

7. A streaming media data obtaining method, comprising:
receiving, by a server, a call request message sent by a calling terminal device, wherein the call request message is used by the calling terminal device to call a called terminal device;
sending, by the server, an identifier request message to the called terminal device, wherein the identifier request message is used by the server to request the called terminal device for a first identifier, the first identifier is used to identify first streaming media data, and the first streaming media data is streaming media data that is played on the calling terminal device when the calling terminal device calls the called terminal device;
receiving, by the server, an identifier response message sent by the called terminal device, wherein the identifier response message comprises the first identifier; and
sending, by the server, a call response message to the calling terminal device, wherein the call response message comprises the first identifier.

8. A terminal device, wherein the terminal device is a calling terminal device, and the terminal device comprises an obtaining module, a sending module, and a receiving module, wherein
the obtaining module is configured to obtain a first identifier, wherein the first identifier is used to identify first streaming media data, and the first streaming media data is streaming media data that is played on the calling terminal device when the calling terminal device calls a called terminal device;
the sending module is configured to send a streaming media data request message comprising the first identifier obtained by the obtaining module to a first server, wherein the streaming media data request message is used to request the first streaming media data; and
the receiving module is configured to receive a streaming media data response message sent by the first server, wherein the streaming media data response message comprises the first streaming media data.

9. The terminal device according to claim 8, wherein the first identifier is an identifier that is set in the called terminal device; and
the obtaining module is specifically configured to: send a call request message to a second server, and receive a call response message sent by the second server, wherein the call request message is used by the calling terminal device to call the called terminal device, the call response message comprises the first identifier, and the first identifier is obtained from the called terminal device after the second server receives the call request message.

10. The terminal device according to claim 8, wherein the first identifier is an identifier that is set in the calling terminal device; and
the obtaining module is specifically configured to obtain the first identifier saved in the calling terminal device.

11. The terminal device according to any one of claims 8 to 10, wherein the terminal device further comprises a determining module; and
the determining module is configured to determine that the calling terminal device fails to obtain the first streaming media data.

12. The terminal device according to claim 11, wherein
the determining module is specifically configured to: if the receiving module receives, in a preset time segment, an error response message sent by the first server, determine that the calling terminal device fails to obtain the first streaming media data, wherein the error response message is used to indicate that the first server fails to obtain the first streaming media data; or
the determining module is specifically configured to: if the receiving module has not received, in the preset time segment, the streaming media data response message and the error response message that are sent by the first server, determine that the calling terminal device fails to obtain the first streaming media data.

13. The terminal device according to claim 11 or 12, wherein
the sending module is further configured to: after the determining module determines that the calling terminal device fails to obtain the first streaming media data, send a notification message to the second server, wherein the notification message is used by the calling terminal device to notify the second server that the calling terminal device fails to obtain the first streaming media data; and
the receiving module is further configured to receive second streaming media data sent by the second server, wherein the second streaming media data is streaming media data that is customized by the calling terminal device or the called terminal device in the second server.

14. A server, comprising a receiving module and a sending module, wherein
the receiving module is configured to receive a call request message sent by a calling terminal device, wherein the call request message is used by the calling terminal device to call a called terminal device;
the sending module is configured to send an identifier request message to the called terminal device, wherein the identifier request message is used by the server to request the called terminal device for a first identifier, the first identifier is used to identify first streaming media data, and the first streaming media data is streaming media data that is played on the calling terminal device when the calling terminal device calls the called terminal device;
the receiving module is further configured to receive an identifier response message sent by the called terminal device, wherein the identifier response message comprises the first identifier; and
the sending module is further configured to send a call response message to the calling terminal device, wherein the call response message comprises the first identifier received by the receiving module.

15. A terminal device, comprising a processor and a memory coupled to the processor, wherein
the memory is configured to store a computer instruction, and when the terminal device runs, the processor executes the computer instruction stored in the memory, to enable the terminal device to perform the streaming media data obtaining method according to any one of claims 1 to 6.

16. A server, comprising a processor and a memory coupled to the processor, wherein
the memory is configured to store a computer instruction, and when the server runs, the processor executes the computer instruction stored in the memory, to enable the server to perform the streaming media data obtaining method according to claim 7.

17. A computer-readable storage medium, comprising a computer instruction, wherein when the computer instruction is run on a calling terminal device, the calling terminal device is enabled to perform the streaming media data obtaining method according to any one of claims 1 to 6.

18. A computer-readable storage medium, comprising a computer instruction, wherein when the computer instruction is run on a server, the server is enabled to perform the streaming media data obtaining method according to claim 7.

19. A communications system, comprising: a first server, a called terminal device, the terminal device according to any one of claims 8 to 13 or claim 15, and the server according to claim 14 or 16, wherein the terminal device according to any one of claims 8 to 13 or claim 15 is a calling terminal device, and the server according to claim 14 or 16 is a second server.
